# EUROPEAN PATENT APPLICATION

(11) **EP 4 725 291 A1**
(43) Date of publication of application: **15.04.2026**
(21) Application number: 24315465.5
(22) Date of filing: 10.10.2024
(51) Int. Cl.: A01D 46/28

(54) **A DESTEMMER ARRANGEMENT**

(71) Applicant: CNH Industrial France S.A.S., 91150 Morigny-Champigny (FR)
(72) Inventor: Supiot, Guillaume, 91150 Morigny-Champigny (FR)
(74) Representative: CNH Industrial IP Department

(57) **Abstract**

The destemmer rotor (3') comprises a cylindrical shaft (7') and a plurality of destemmer fingers (20) attached to the shaft and extending away from the shaft in multiple adjacent planes perpendicular to the shaft, the fingers comprising a base (20a) and a portion (20b) extending outward from the base. At least one finger is configured to be inserted in a radial direction in a cavity (21) provided in the shaft, the base of the finger comprising a pin (22) inserted radially through the base (20a) and configured to :
- clamp the base into the cavity (21) when the pin is inserted down to a first depth, the pin comprising an end portion (22c) and a mid portion (22b) that is narrower than the end portion, wherein the end portion is configured to force a plurality of clamping legs (28) at the lower end of the base to be clamped in a clamping portion (26) of the cavity by a required clamping force, when the pin is inserted down to said first depth,
- remove the clamping force when the pin (22) is inserted down to a second depth, by bringing the narrower portion (22b) of the pin between the clamping legs (28).

## Description

### Field of the invention

The present invention is related to mechanical harvesting and to the treatment of harvested fruit, in particular to destemmer arrangements as applicable as part of a grape harvester or as a stationary installation for treating harvested grapes.

### State of the art.

Today destemming of grapes is usually done mechanically by a destemmer arrangement which may be a standalone installation or it may be incorporated in a grape harvester. Most destemmers include rotating destemmer rotors comprising multiple fingers arranged along a rotating shaft. The grape bunches are transported on a perforated belt transporter under the rotating destemmer rotors and the interaction between the rotating fingers and the grape bunches results in removing the grapes which are then caught in a receptacle while the stems are removed as residue.

The entrance of large objects into the destemmer arrangement and/or unavoidable wear of the destemmer fingers may result in some of the fingers breaking or being otherwise damaged, hence the need to replace them with new fingers. In currently applied systems, the replacement of a limited number of destemmer fingers is a technically complex and time-consuming job which requires at least partly disassembling the rotor. It is desirable therefore to have a system that allows a quicker replacement of individual destemmer fingers.

### Summary of the invention

The invention is related to a destemmer rotor and a destemmer arrangement in accordance with the appended claims, to a self-driving grape harvester equipped with said destemmer arrangement and to methods for attaching and releasing a destemmer finger.

The destemmer rotor is configured to be rotatably mounted in a destemming arrangement, the rotor comprising a cylindrical shaft and a plurality of destemmer fingers attached to the shaft and extending away from the shaft in multiple adjacent planes perpendicular to the shaft, the fingers comprising a base and a portion extending outward from the base, wherein at least one finger is configured to be inserted in a radial direction in a cavity provided in the shaft, the base of the finger comprising a pin inserted radially through the base and configured to :
- clamp the base into the cavity when the pin is inserted down to a first depth, the pin comprising an end portion and a mid portion that is narrower than the end portion, wherein the end portion is configured to force a plurality of clamping legs at the lower end of the base to be clamped in a clamping portion of the cavity by a required clamping force, when the pin is inserted down to said first depth,
- remove the clamping force when the pin is inserted down to a second depth, by bringing the narrower portion of the pin between the clamping legs.

The clamping force is generated by the end portion of the pin pushing the clamping legs apart. At least some of the clamping legs are elastically bendable so that bringing the second pin portion of the pin between the clamping legs enables the elastic legs to return to a non-deformed state, thereby removing the clamping force. The portion of the finger that extends outward from the base of the finger may comprise a first portion that is inclined relative to a radial direction of the shaft..

Preferably all the fingers are attached by the same mechanism to the shaft. This enables a quick replacement of the destemmer fingers : releasing a finger requires the simple act of pushing the pin down to the second depth, and attaching a new finger requires inserting the base of the finger radially in a cavity of the shaft, and pushing the pin down to the first depth. If the shaft is formed of discs assembled together, no full or partial disassembling of the shaft is required when one or more destemmer fingers need replacing.

### Brief description of the figures

Figure 1 illustrates a typical destemmer arrangement as presently known in the art.
Figure 2 illustrates a destemmer rotor applied in the prior art arrangement shown in Figure 1.
Figures 3a and 3b show details of the prior art destemmer rotor from two different viewpoints.
Figures 4 and 5 show a destemmer rotor according to an embodiment of the invention and a detail of the rotor as seen from a first direction.
Figures 6 and 7 show a destemmer rotor according to the same embodiment as Figures 4 and 5 and a detail of the rotor as seen from a second direction.
Figure 8a shows a cross-section of one disc of the destemmer rotor illustrated in Figures 4 to 7, with destemmer fingers in different conditions relative to the disc. Figure 8b shows one destemmer finger without the pin for attaching and releasing the finger. Figure 8c is an image of the pin separately.
Figure 9 shows a tool shaped especially for enabling both a correct attachment of a destemmer finger and the release of the finger.

### Detailed description of preferred embodiments of the invention

Preferred embodiments will now be described with reference to the drawings. The detailed description is not limiting the scope of the invention, which is defined only by the appended claims.

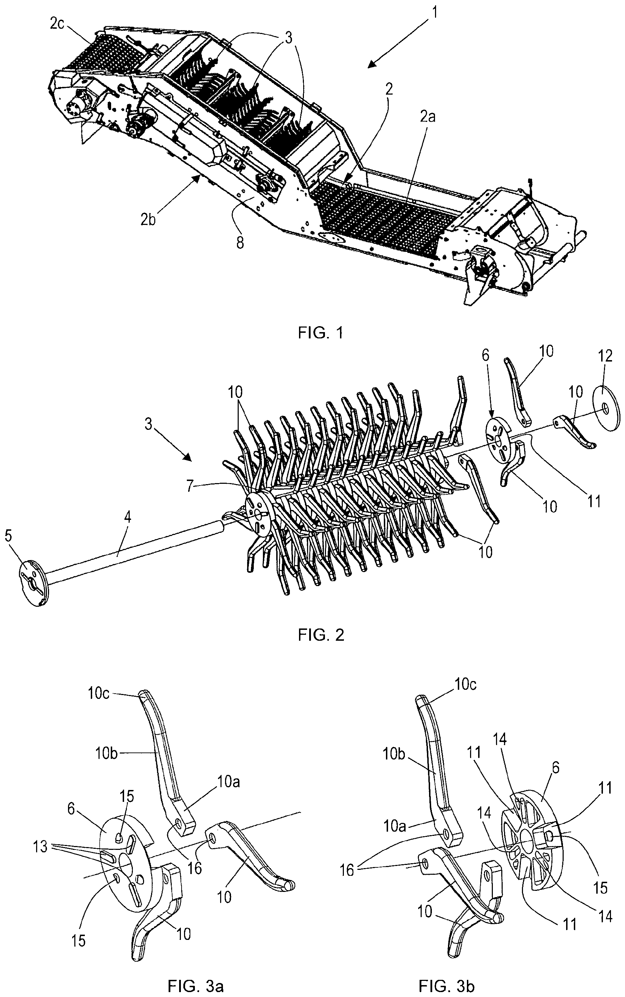

A typical destemmer arrangement 1 as presently known is shown in Figure 1. This type of arrangement is currently incorporated for example in self-driven grape harvesters produced by the applicant. The arrangement includes a movable belt 2 configured to move relative to a housing 8. The belt is formed of gratings which allow individual grapes to fall through the gratings. Bunches of harvested grapes are loaded onto the loading section 2a of the belt, and transported towards an upwardly inclined destemmer section 2b, comprising three destemmer rotors 3 mounted next to each other in the direction of the belt's movement and rotatable relative to the housing 8. In operation, a cover closes off the destemmer section, but this cover is not shown in Figure 1 in order to visualize the destemmer rotors 3. The interaction between the rotating rotors 3 and the bunches of grapes removes the grapes from the stems of the bunches. The grapes fall through the belt gratings and are collected in a container (not shown), while the stems move further up an inclined end section 2c of the belt, eventually falling over the edge of the end section, to thereby be removed from the installation.

Figure 2 shows a partly exploded view of a destemmer rotor 3 as applied in the prior art arrangement shown in Figure 1. The rotor comprises a central axle 4 provided with a fixing head 5 at one side. The axle 4 passes through aligned central openings of a series of discs 6 which are assembled together to form a central shaft 7 of the rotor. To each disc 6, three destemmer fingers 10 are attached. As best seen in the detailed views in Figures 3a and 3b, the fingers have a specific shape, comprising a base 10a attached to the shaft, a mid section 10b that is inclined relative to the radial direction of the shaft 7, and a tip section 10c inclined in the opposite sense to the mid section 10b. This shape of the fingers together with the material of the fingers is optimal for the required interaction with the grape bunches, which is to remove the grapes from the stems with no or minimal damage to the grapes. The material of the fingers 10 has a degree of flexibility while the discs 6 are formed of a more rigid material.

The detail of one disc 6 and its associated destemmer fingers 3 in Figure 3b, as seen from the opposite side compared to Figures 2 and 3a, shows how the fingers are attached to the shaft : each disc comprises three cavities 11, and the base 10a of the fingers is inserted in an axial direction in said respective cavities and held in place by the next disc or in the case of the last disc, by a closing plate 12. The discs are fitted together with the help of radially oriented protrusions 13 on one side of the disc which fit into depressions 14 on the other side of the adjacent disc, while smaller protrusions 15 at the bottom of the cavities 11 and on the opposite side of the discs are fitted into holes 16 provided in the base 10a of the fingers. Appropriate fixing means mounted to the central axle 4 and not shown in the drawings are holding the totality of the discs 6 firmly together to form the shaft 7 and said fixing means are coupled to rotational bearings and to an actuator which enables the rotation of the rotors 3 relative to the housing 8, above the advancing belt 2.

This manner of assembling the rotor 3 has the disadvantage that when a finger breaks or wears and therefore needs replacement, the fixing means holding the discs 6 together needs to be released before the finger can be removed from its cavity. This however releases also other fingers in the vicinity of the damaged finger, which makes it awkward to reassemble the rotor. This replacement method is therefore complex and time-consuming.

The present invention solves this problem by providing a different way of attaching and removing the destemmer fingers to and from the shaft.

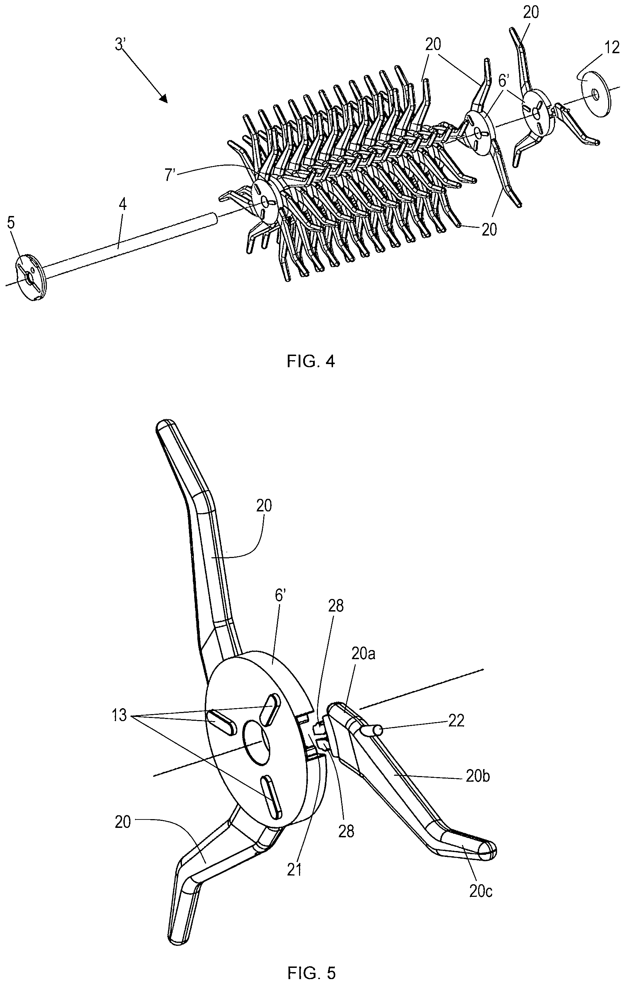

Figure 4 is a semi-exploded view of a destemmer rotor 3' according to an embodiment of the invention. The rotor again comprises a central axle 4 provided with a fixing head 5 and an end plate 12, with a plurality of discs 6' held together between the fixing head 5 and the end plate 12 when the rotor is assembled, thereby forming a shaft 7' to which a plurality of destemmer fingers 20 is attached.

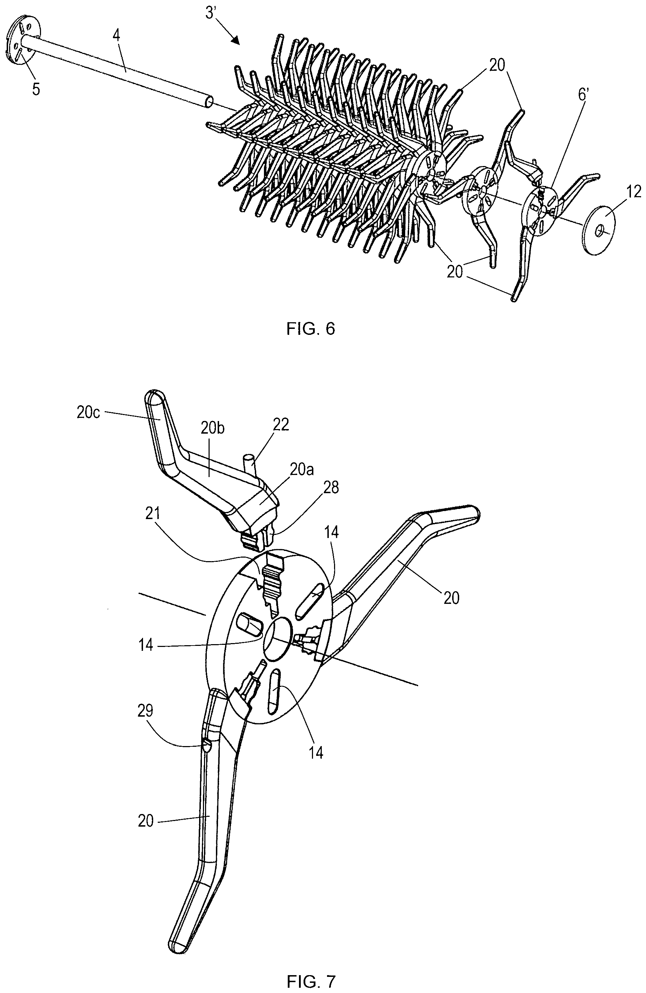

Figure 6 shows the same semi-exploded view of the rotor 3' as seen from the other side, and Figures 5 and 7 respectively show detailed semi-exploded views of one disc 6' and its associated fingers 20, as seen from the two respective directions. The protrusions 13 and depressions 14 are present, as in the prior art version of the discs.

The shape of the mid section 20b and the tip section 20c of the fingers is the same as in the existing configuration, but the base 20a of the fingers is different, and the way in which this base is coupled to the disc 6' is also different due to a different design of the discs. The discs comprise again three cavities 21, but these cavities are configured to receive the base 20a of the fingers by insertion of this base in a radial direction of the shaft 7', instead of in an axial direction.

The mechanism for attaching and removing a finger 20 to and from a disc 6' is defined by the shape of these cavities 21 and of the base 20a of the fingers, and the fact that the mechanism further comprises a specially shaped pin 22 that enables the attachment and removal of a finger without disassembling the shaft 7. The pin 22 can be formed of metal, for example inox steel, or of a plastic material of suitable strength and rigidity.

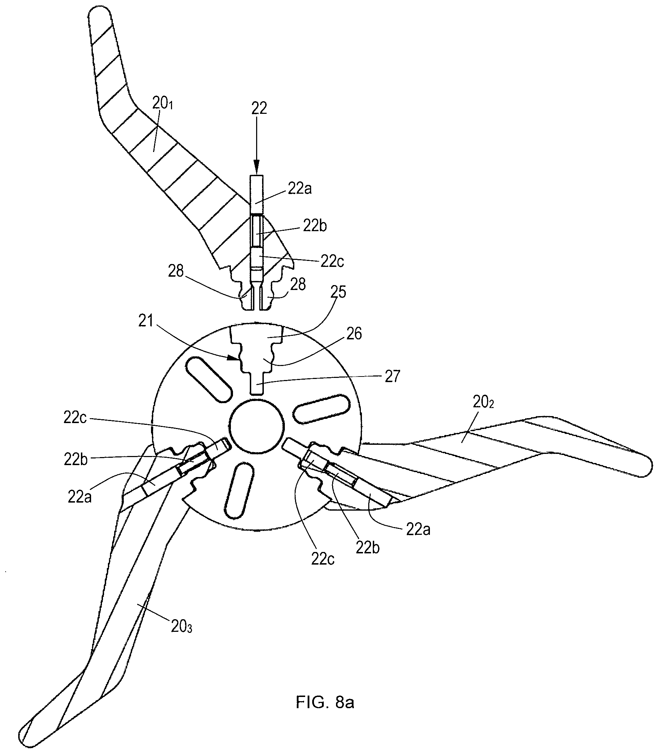

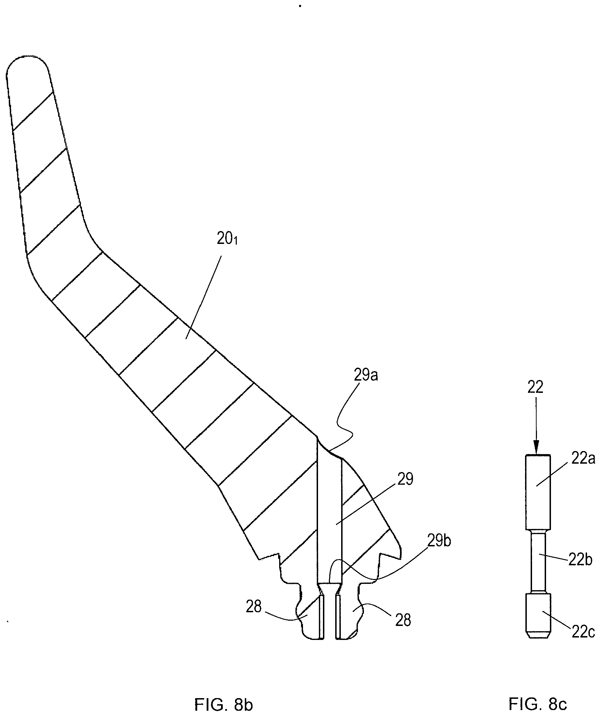

The mechanism is best seen in the cross-section view shown in Figure 8a, which shows three destemmer fingers 20₁, 20₂, 20₃. The first one 20₁ is ready to be inserted into its corresponding cavity 21. The second 20₂ is clamped into its cavity, and the third one 20₃ is ready to be released from the cavity. The role of the pin 22 in these three states will be explained. Each cavity 21 comprises an entry portion 25, a clamping portion 26 and a cylindrical end portion 27 directly below the clamping portion 26. The base 20a of a corresponding destemmer finger comprises at its lower end (opposite end of the tip portion 20c) a pair of clamping legs 28 configured to be inserted and clamped in the clamping portion 26 of the cavity 21. In addition, the base 20a of the finger is provided with a longitudinal through-opening oriented radially relative to the disc 6' when the finger is attached. The opening 29 is best visualized in the image in Figure 8b, showing the first destemmer finger 20₁ without the pin inserted in the through-opening 29. The opening 29 extends between an inlet section 29a and an exit section 29b. The clamping legs 28 are mounted on either side of the exit section 29b of the through-opening 29. The pin 22, shown separately in Figure 8c, is insertable in the through-opening 29 and the shape of the pin enables clamping the finger 20 as well as releasing the finger, in the manner described hereafter.

In the embodiment shown, the pin 22 is cylindrical and comprises three longitudinal portions : a first portion 22a, a second portion 22b and a third portion 22c. The first and third pin portions 22a,22c have the same diameter while the second pin portion 22b has a smaller diameter than the first and third pin portions. The second and third pin portions 22b,22c may also be referred to as the mid portion and the end portion of the pin 22.

The pin 22 fits loosely or with a small resistance (that can be easily overcome manually) in the through-opening 29, and prior to attaching the finger, the pin is inserted in the through-opening, with the third pin portion 22c entering first through the inlet section 29a of the through-opening 29. Detached fingers 20 may actually be kept in this state, with the pin 22 inserted not further than the exit section 29b of the through opening 29.

With the pin 22 in this initial position, as is the case for the first finger 20₁ in Figure 8a, the base 20a of the finger can be inserted manually and with no or minimal resistance into the entry portion 25 of the cavity 21, and further until the clamping fingers 28 are loosely lodged in the clamping portion 26 of the cavity. The base of the finger is inserted radially with respect to the disc, so this insertion can be done while the shaft 7' is assembled, i.e. all the discs 6' are assembled together.

The outer surface of the clamping fingers 28 is profiled in a similar way as the inner surface of the clamping portion 26 so that the respective surfaces match. With the pin 22 in the initial position however, the clamping legs 28 fit loosely into the clamping portion 26 or can be inserted therein with little manual force.

In the embodiment shown, both clamping legs 28 are bendable elastically relative to their basis around the exit section 29b of the through-opening 29 : bending of the legs 28 is possible by a suitable bending force. Within a given displacement of the legs, the clamping legs return to their initial position when the bending force is removed. This elasticity of the clamping legs can be obtained by producing the destemmer fingers integrally from a material having a degree of flexibility. Materials presently used to produce the prior art destemmer fingers shown in Figures 1-3 are suitable for this purpose. It is however also possible according to other embodiments, that the clamping legs 28 are made from a different material from the rest of the finger, and that the clamping legs are fixed to the finger body by an adhesive or other attachment means.

Once the clamping legs 28 are lodged in the clamping portion 26, the pin 22 is pushed further down to a first depth illustrated by the finger 20₂, bringing the third pin portion 22c in the space between the clamping legs 28. The distance between the clamping legs 28 and the diameter of the third pin portion 22c are configured so that this action requires a higher force, preferably to be exerted by a suitable tool, to thereby force the third pin portion 22c to enter the narrow space between the clamping legs 28 and thereby exert the above-described bending force on both clamping legs in opposite directions. This pushes the clamping legs 28 apart into close contact with the matching inner surfaces of the clamping portion 26 of the cavity 21. The contact force between the matching surfaces establishes a clamping force that holds the destemmer finger firmly in the cavity 21, i.e. the finger is effectively attached to the rotor shaft 7 and ready for destemming action.

For releasing the destemmer finger, the pin 22 is pushed further down to a second depth into the cavity 21, so that the third pin portion 22c enters the end portion 27 of the cavity 21. The diameter of this end portion is such that the third pin portion 22c fits loosely or with minimal resistance in this end portion. A tool is however required in order to force the third pin portion 22c out of the area between the clamping legs 28, overcoming the clamping force. The length of the various pin portions is such that when the third pin portion 22c is effectively pushed down into the end portion 27 of the cavity, the second pin portion 22b fully occupies the space between the clamping legs 28. This is the condition of the third destemmer finger 20₃ shown in Figure 8a. Due to its reduced diameter, the second pin portion 22b does not generate a clamping force, i.e. the clamping force is removed. The clamping legs 28 return to their initial state, hence the finger 20 can be easily removed from the cavity 21.

It is clear from the previous description that attaching and removing an individual destemmer finger 20 to or from the shaft 7' does not require disassembling the shaft.

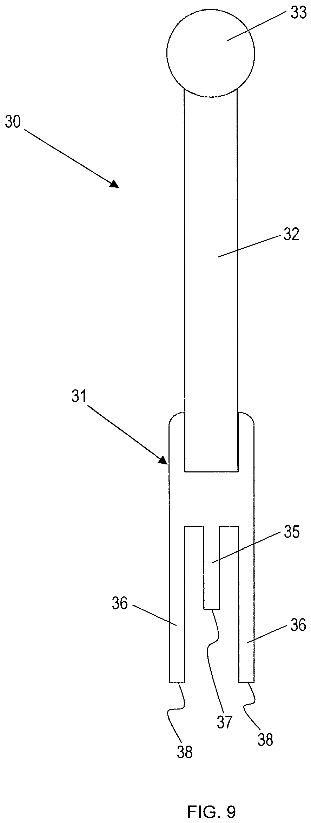

Moving the pin 22 from the condition of finger 20₁ to the clamped condition of finger 20₂ can be done by any suitable tool, for example a screwdriver or other elongate tool able to push the pin into the opening 29. A preferred tool may however be used which enables automatically pushing the pin down to the correct depth. Such a tool may resemble the shape presented in Figure 9. The tool 30 has a preferably metal headpiece 31 welded to a cylindrical shaft 32 that may be equipped with a handle 33 in the form of a sphere or any other suitable shape. The headpiece 31 comprises a central plunger 35 and two lateral plungers 36 extending like a fork on either side of the central plunger 35. The lateral plungers 36 are parallel to the central plunger and of longer length than the central plunger 35. The space between the lateral plungers 36 is wider than the width of the base of a destemmer finger 20, as measured in the longitudinal direction of the shaft 7'. The distance between the end surfaces 37 and 38 of the central plunger 35 and the lateral plungers 36 is such that when the central plunger 35 is used to push the pin 22 into the through-opening 29, with the lateral plungers 36 held across the width of the finger, the clamping depth (as in figure 20₂) is reached when the lateral plungers 36 contact the cylindrical outer surface of the shaft 7'. One or the other of the lateral plungers 36 can then be used to push the pin further down (as in finger 20s), in order to release the finger.

Some of the above-described features do not limit the scope of the invention. The illustrated shape of the matching surfaces of the clamping legs 28 and the clamping portion 26 of the cavities 21 can be different from the shapes shown in the drawings.

The pin 22 could be other than cylindrical, having for example a square cross-section, with the through-opening 29 and the end portion 27 of the cavity 21 having a matching square cross-section that enables the functionality of the pin 22 as described above. The first and third pin portions 22a and 22c may be of equal length so that the pin shape is symmetrical in the longitudinal direction. In that case, the pin 22 can be inserted with either the first or the third portion entering first through the inlet section 29a of the through-opening 29.

According to an embodiment, a seal is installed between the pin 22 and the through-opening 29. This can for example be an O-ring mounted in a groove produced in the sidewall of the through-opening 29 or in a groove produced in the pin 22. The seal acts as a means for preventing dirt and liquid from entering the cavity 21.

Instead of being formed of assembled discs 6', the shaft 7' could be a solid shaft having a plurality of cavities 21 as described above, through its cylindrical outer surface, and distributed along the length of the shaft. The shaft could also be formed of several solid portions assembled together, each portion comprising cavities configured to receive destemmer fingers in multiple parallel planes.

The number of clamping legs 28 at the lower end of a destemmer finger 20 could be different from two. For example three clamping legs could be placed around the exit section 29b of the through-opening 29, the clamping legs being arranged at angular intervals of 120°, or four legs could be placed at intervals of 90°. The inner surface of the clamping portion 26 of the cavity is then shaped in accordance with the number of clamping legs and with the outer profile of said clamping legs.

According to embodiments, not all the clamping legs are elastically bendable. An alternative to the illustrated embodiment for example could have one elastic clamping leg 28 and one rigid clamping leg 28. When correctly dimensioned, the clamping force can then be generated by pushing the elastic leg away from the rigid leg when the pin is pushed down to the first depth. It is to be noted that pushing an elastic leg away from a rigid leg falls under the wording 'pushing the legs apart', applied in the appended claims.

The shape of the fingers 20 attached to the shaft and/or to each disc 6' could be different from the drawings. Also, the number of fingers attached to each disc and/or to the shaft as a whole could be different from the drawings.

Preferably all the fingers 20 are attached to the shaft 7' by the same attachment mechanism, as described above. The invention covers however also a rotor wherein only one or more and not all the fingers are attached to the shaft by said mechanism.

The invention is related to a destemmer arrangement, for example an arrangement similar to the one shown in Figure 1, but wherein the destemmer rotors are in accordance with the invention, for example in accordance with any of the embodiments described above.

The invention is also related to a self-driven grape harvester comprising a destemmer arrangement in accordance with any embodiment of the invention.

The invention is also related to methods for attaching and releasing a destemmer finger to and from a destemmer rotor according to any embodiment of the invention. The method steps are described above for the specific embodiment shown in the drawings, and summarized in a more generic way in the appended claims.

The invention is also related to a destemmer finger suitable for attachment to a destemmer rotor according to the invention, A destemmer finger according to the invention may be provided with the pin 22 inserted in the through-opening 29. The invention is also related to a kit of parts comprising a destemmer finger 20 and a pin 22 insertable in the through-opening 29 of the finger, in accordance with the invention.

## Claims

1. A destemmer rotor (3') for destemming bunches of grapes or similar fruit when the rotor is rotatably mounted in a destemming arrangement, the rotor comprising a cylindrical shaft (7') and a plurality of destemming fingers (20) attached to the shaft and extending away from the shaft in multiple adjacent planes perpendicular to the shaft, the fingers comprising a base (20a) and a portion (20b,20c) extending outward from the base, wherein at least one finger (20) is releasably attached to the shaft by an attachment mechanism comprising :
- a cavity (21) in the cylindrical surface of the shaft, configured to receive the base (20a) of the finger by radial insertion in said cavity, the cavity comprising a clamping portion (26) and an end portion (27) directly below the clamping portion,
- a through-opening (29) through the base (20a) of the finger (20), the through-opening extending between an inlet section (29a) and an exit section (29b) of said opening, said opening being oriented radially relative to the shaft when the base (20a) of the finger is inserted in the cavity (21),
- at least two clamping legs (28) at the lower end of the base (20a) and arranged around the exit section (29b) of the through-opening, the clamping legs (28) together fitting loosely in the clamping portion (26) of the cavity when no force is exerted on said clamping legs,
- a pin (22) that is insertable in said through-opening (29), the pin having a first, second and third longitudinal portion (22a,22b,22c) wherein the second pin portion (22b) is narrower than the first and third pin portions (22a,22c), and wherein the pin (22) is configured to :
o clamp the base (20a) of the destemmer finger (20) into the cavity (21) when the pin is inserted down to a first depth with the third pin portion (22c) entering first into said through-opening (29), said third pin portion being configured to push the clamping legs (28) apart, thereby forcing the clamping legs to be clamped in the clamping portion (26) of the cavity by a clamping force, when the pin is inserted down to said first depth,
∘ remove the clamping force when the pin (22) is inserted further down to a second depth, thereby pushing the third pin portion (22c) into the end portion (27) of the cavity and bringing the second pin portion (22b) of the pin between the clamping legs (28), wherein at least some of the clamping legs (28) are elastically bendable so that bringing the second pin portion (22b) of the pin between the clamping legs (28) removes the clamping force.

2. The destemmer rotor (3') according to claim 1, wherein the shaft (7') is formed of a plurality of assembled discs (6') held together to form the shaft, at least one of said discs comprising a plurality of said cavities (21), the rotor comprising a respective plurality of destemmer fingers (20) attached to said disc by said attachment mechanism.

3. The destemmer rotor according to claim 1, wherein the shaft (7') is formed of one or more solid cylindrical portions, each portion being provided with cavities configured to receive destemmer fingers extending in multiple of said adjacent planes perpendicular to the shaft.

4. The destemmer rotor (3') according to any one of the preceding claims, wherein the pin (22) is a cylindrical pin, the first and third pin portions (22a,22c) having a higher diameter than the second pin portion (22b), and wherein the through-opening (29) has a circular cross-section.

5. The destemmer rotor (3') according to any one of the preceding claims, wherein all the destemmer fingers (20) are attached in respective cavities (21) of the shaft (7'), by said attachment mechanism.

6. The destemmer rotor (3') according to any one of the preceding claims, wherein the destemmer finger (20) comprises at least a first portion (20b) extending outward from the base (20a) of the finger, and wherein the first portion (20b) is inclined relative to the radial direction of the shaft (7').

7. The destemmer rotor according to any one of the preceding claims, wherein a seal is provided between the pin (22) and the through-opening (29).

8. A destemmer arrangement comprising one or more destemmer rotors (3') according to any one of the preceding claims.

9. A self-driving grape harvester equipped with a destemmer arrangement according to claim 8.

10. A method for attaching a destemmer finger (20) to the shaft (7') of a destemmer rotor (3') according to any one of claims 1 to 7, the method comprising the steps of :
- inserting the pin (22) into the through-opening (29) with the third pin portion (22c) entering first through the opening's inlet section (29a) so that the third pin portion is inserted not further than the exit section (29b) of the through-opening,
- inserting the base (20a) of the finger into the cavity (21), until the clamping fingers (28) are lodged in the clamping portion (26) of the cavity (21),
- pushing the pin (22) further down to the first depth, thereby pushing the clamping legs apart and clamping the clamping legs into the cavity, to thereby attach the finger to the shaft.

11. A method for releasing a destemmer finger (20) attached by the method of claim 10, by pushing the pin (22) further down to the second depth, thereby placing the third pin portion (22c) in the end portion (27) of the cavity while the second pin portion (22b) is placed between the clamping legs (28), followed by pulling the finger free from the cavity (21) and from the shaft (7').

12. The method according to claim 10 or 11, wherein the acts of attaching or releasing the finger are done with the help of a tool (30) comprising a central plunger (35) and two lateral plungers (36) placed on either side of the central plunger, the distance between the lateral plungers being higher than the width of the base (20a) of the destemmer finger, and wherein :
- the plungers (35,36) are insertable in the through-opening (29),
- the lateral plungers (36) are of equal length and said equal length is longer than the length of the central plunger (35),
- the difference in length is such that when the central plunger (35) is used to push the pin (22) down to said first depth, with the lateral plungers (36) positioned across the width of the finger, said first depth is reached at the moment when the end surfaces (38) of the lateral plungers (36) come in contact with the outer surface of the shaft (7'),
- either one of the lateral plungers (36) can be used to push the pin (22) down to the second depth, to thereby release the finger (20).

13. A destemmer finger (20) suitable for attachment to the shaft (7') of a destemmer rotor (3') according to any one of claims 1 to 7, wherein the finger comprises a pin (22) inserted in the through-opening (29) of the finger.

14. A kit of parts comprising a destemmer finger (20) suitable for attachment to the shaft (7') of a destemmer rotor (3') according to any one of claims 1 to 7, and a pin (22) insertable in the through-opening (29) of the destemmer finger (20).
